# EUROPÄISCHE PATENTANMELDUNG

(11) **EP 3 152 994 A1**
(43) Veröffentlichungstag der Anmeldung: **12.04.2017**
(21) Anmeldenummer: 16401061.3
(22) Anmeldetag: 12.09.2016
(51) Int. Cl.: A01C 17/00

(54) **VERFAHREN ZUR ABWURFWINKELANPASSUNG EINES SCHLEUDERSTREUERS**

(30) Priorität: 06.10.2015 DE 102015116946
(71) Anmelder: Amazonen-Werke H. Dreyer GmbH & Co. KG, 49205 Hasbergen (DE)
(72) Erfinder: Rahe, Florian, 49504 Lotte (DE)

(57) **Zusammenfassung**

Beschrieben werden ein Verfahren zur Abwurfwinkelanpassung eines Schleuderstreuers (100) und ein entsprechender Schleuderstreuer. Demnach werden Messdaten (MD), die ein von einer Streuscheibe (1) erzeugtes Ist-Streubild (SB1) einer Düngersorte (DS) charakterisieren, mit Referenzdaten (RD), die ein der Streuscheibe und der Düngersorte zugeordnetes Soll-Streubild charakterisieren, verglichen. Ferner wird daraus ein Korrekturwert (KW) für einen einer vorgegebenen Arbeitsbreite (AB) des Düngeraustrags zugeordneten Soll-Abwurfwinkel (AWWs1) maschinell berechnet. Dadurch können die Messdaten als Grundlage für eine fortlaufende Abwurfwinkelregelung des Schleuderstreuers eingesetzt werden.

## Beschreibung

Die Erfindung betrifft ein Verfahren zur Abwurfwinkelanpassung eines Schleuderstreuers und einen entsprechend ausgebildeten Schleuderstreuer.

Wie die DE 197 23 359 A1 offenbart, eigenen sich für den Austrag von Dünger auf landwirtschaftlichen Anbauflächen Schleuderstreuer, insbesondere solche mit zwei nebeneinander angeordneten und gegenläufig angetriebenen Streuscheiben. Hierbei wird der Dünger in Abhängigkeit vom Streuscheibentyp und der Düngersorte in Form eines charakteristischen Streufächers oder Streubilds durch Anschlussfahren über eine vorgegebene Arbeitsbreite verteilt.

Als Parameter zur Charakterisierung von Streubildern einer Streuscheibe eignen sich insbesondere die mittlere Wurfweite WW und der mittlere Abwurfwinkel AWW des Düngeraustrags. Diese Werte werden für verschiedene Arbeitsbreiten AB und für unterschiedliche Düngersorten in Laborversuchen zur Streutabellenerstellung ermittelt. Je nach Bedingung werden einer oder mehrere dieser Werte an einer Bedienstation zu Beginn des Arbeitsbetriebes eingegeben. Je nach konkreter Umsetzung kann hierbei die Eingabe in Form der Wurfweite und/ oder Wurfrichtung oder entsprechender Kennwerte oder sonstiger Parameter erforderlich sein. Die mittleren Abwurfwinkel AWW und Wurfweiten WW werden beispielsweise als 50%-Perzentil einer in Umfangsrichtung zum Streuscheibenmittelpunkt gemessenen Abwurfwinkelverteilung beziehungsweise einer radial von der Streuscheibe aus definierten Wurfweiteverteilung des Streubilds ermittelt. Weitere gebräuchliche Parameter sind der Anfangswert AWWa der Abwurfwinkelverteilung als 5%-Perzentil und der zugehörige Endwert AWWe als 95%-Perzentil, ebenso ein Anfangswert WWa der Wurfweiteverteilung als 5%-Perzentil und ein Endwert WWe als 95%-Perzentil. Diese charakteristischen Parameter von Streubildern werden beispielsweise unter reproduzierbaren Bedingungen durch Schalenversuche in Streuhallen für einzelne Düngersorten in Abhängigkeit vom Streuscheibentyp, der Drehzahl und unterschiedlichen Stellungen eines an der Streuscheibe ausgebildeten Einleitsystems für Dünger ermittelt. Die für bestimmte Arbeitsbreiten und Düngersorten unter Standardbedingungen einzustellenden Stellungen und Drehzahlen werden dann üblicherweise in Streutabellen aufgelistet.

Nachteilig ist jedoch, dass sich insbesondere die Oberflächeneigenschaften von Dünger in Abhängigkeit von Lagerbedingungen, wie beispielsweise der Luftfeuchte oder dergleichen, ändern. Insbesondere das Reibverhalten der Düngerkörner wirkt sich entscheidend auf die Abwurfwinkelverteilung aus. Ebenso können sich einzelne Düngerchargen unterscheiden, beispielsweise hinsichtlich der Korngröße, die direkten Einfluss auf die erzielte Wurfweiteverteilung hat. Daher kann die Anwendung der unter standardisierten Bedingungen ermittelten Streuparameter im konkreten Anwendungsfall zu unbefriedigenden Ergebnissen führen.

Es wurden daher bereits Anstrengungen unternommen, Streufächer bzw. Ist-Streubilder beim Düngeraustrag zu kontrollieren und gegebenenfalls an ein Soll-Streubild anzugleichen. Hierzu ist es beispielsweise aus der EP 2 783 560 A2 bekannt, an jeder Streuscheibe über deren nutzbaren Abwurfwinkelbereich Radarsensoren zu verteilen, die Radarkeulen aussenden und im nutzbaren Abwurfwinkelbereich Information über eine Ist-Abwurfwinkelverteilung liefern. Aus dieser lässt sich dann beispielsweise der mittlere Abwurfwinkel AWW ableiten. Somit liegt im Arbeitsbetrieb laufend Information über Ist-Abwurfwinkel vor, die zur Steuerung der den Streuscheiben zugeordneten Einleitsysteme für Dünger und/oder zur Drehzahlanpassung der Streuscheiben verwendet werden kann.

Trotz dieser Verbesserungen sind jedoch weiterhin Messungen von Streubildern in Schalenversuchen vor Ort zur Vorbereitung des Düngeraustrags einer bestimmten Charge erforderlich, ebenso Bedienereingriffe im Arbeitsbetrieb auf der Grundlage der Streutabellen.

Hierzu werden vor Ort Schalen an vorgegebenen Messpunkten im Streubereich des Schleuderstreuers verteilt und darin die weggeschleuderten Düngerkörner aufgefangen, um aus den aufgefangenen Mengen die erzeugte Düngerverteilung stichprobenartig zu ermitteln. Die aufgefangenen Düngermengen können dann an einer Bedienstation des Schleuderstreuers eingegeben werden, um daraus eine Einstellempfehlung zur Korrektur der Einleitsysteme des Schleuderstreuers zu ermitteln.

Somit können einzelnen Chargen einer Düngersorte prinzipiell jederzeit im Schalenversuch vermessen werden, um die Stellung der Einleitsysteme für eine gewünschte Arbeitsbreite zu korrigieren. Jedoch sind bei einem herkömmlichen Schleuderstreuer nur Korrekturen der Einleitsysteme und der Drehzahlen möglich, um die im Schalenversuch ermittelten Abweichungen vom Sollstreubild zu kompensieren.

Ein grundlegendes Problem besteht dann darin, dass Schleuderstreuer mit einer Überwachung des Ist-Abwurfwinkels gemäß der EP 2 783 560 A2 während des Düngeraustrags fortlaufend versuchen, den gemessenen Ist-Abwurfwinkel an einen vorgegebenen Soll-Abwurfwinkel anzugleichen. Wurde die Stellung der Einleitsysteme zu Beginn des Arbeitsbetriebs noch auf der Grundlage eines Schalenversuchs korrigiert, so wird diese Korrektur von der einsetzenden Regelung wieder geändert und geht verloren.

Es besteht somit Bedarf für Verfahren zur Abwurfwinkelanpassung und für entsprechende Schleuderstreuer, bei denen sich die Vorteile einer Abwurfwinkelregelung und einer Parameterkorrektur auf der Grundlage von gemessenen Streubildern kombinieren lassen.

Die gestellte Aufgabe wird mit einem Verfahren gemäß Anspruch 1 gelöst. Demnach dient dieses zur Abwurfwinkelanpassung eines Schleuderstreuers mit insbesondere zwei Streuscheiben und umfasst einen Vergleich von Messdaten, die ein von einer oder mehreren Streuscheiben erzeugtes Ist-Streubild einer Düngersorte charakterisieren, welche durch eine separate stationäre oder mitführbare Messeinrichtung ermittelt werden, die vorzugsweise kein fester funktionaler Bestandteil des Schleuderstreuers ist, mit Referenzdaten, die ein der Streuscheibe und der Düngersorte zugeordnetes Soll-Streubild charakterisieren. Erfindungsgemäß wird daraus ein Korrekturwert für einen einer vorgegebenen Arbeitsbreite des Düngeraustrags zugeordneten Soll-Abwurfwinkel maschinell berechnet. Somit können die Messdaten als Grundlage für eine fortlaufende Abwurfwinkelregelung des Schleuderstreuers im Arbeitsbetrieb eingesetzt werden.

Der Soll-Abwurfwinkel ist insbesondere ein mittlerer Soll-Abwurfwinkel. Der berechnete Soll-Abwurfwinkel kann dann als Referenzparameter in einer Abwurfwinkelregelung, also zur fortlaufenden Anpassung des Abwurfwinkels an während des Düngeraustrags herrschende Arbeitsbedingungen, eingesetzt werden. Insbesondere wird dadurch vermieden, dass eine zuvor aufgrund eines Schalenversuchs oder dergleichen geänderte Positionseinstellung eines Einleitsystems der Streuscheibe durch eine an der Streuscheibe ausgebildete Abwurfwinkelregelung wirkungslos wird. Vielmehr wird der aus den Messdaten berechnete Korrekturwert zum Bestandteil der Abwurfwinkelregelung. Der Korrekturwert ist vorzugsweise ein vor dem Arbeitsbetrieb berechneter und festgelegter Wert, der im anschließenden Arbeitsbetrieb beibehalten wird.

Die Messdaten des Ist-Streubilds werden vor dem eigentlichen Arbeitsbetrieb oder zu Beginn des Arbeitsbetriebes erhoben. Beispielsweise wird ein derart auf einem Hallenboden, einem Feld oder auf einer anderen geeigneten und im Wesentlichen horizontal ausgerichteten Fläche erzeugtes Ist-Streubild des auszubringenden Düngers mittels Schalenversuch oder Radarmessung im Sinne einer flächigen Verteilung vermessen. Vorzugweise werden Schalen an für das Streubild repräsentativen Stellen des Streubereichs aufgestellt und die darin aufgefangenen Mengen des Düngers stichprobenartig bestimmt. Dieser Vorgang kann natürlich auch zu allen Zwischenzeitpunkten auf dem Feld geschehen. Vorteilhafterweise ist natürlich die Bestimmung vor oder zu Beginn des eigentlichen Arbeitsbetriebes.

Vorzugsweise wird die Stellung eines Einleitsystems für Dünger bezüglich der Streuscheibe automatisch auf der Grundlage des Korrekturwerts verändert. Das heißt, eine separate Eingabe des Korrekturwerts ist entbehrlich. Beispielsweise wird auf der Grundlage der im Schalenversuch oder dergleichen gewonnenen Messdaten direkt ein Korrekturwert berechnet, der zur Abwurfwinkelregelung verwendet wird. Die Messdaten können jedoch auch durch andersartige Erfassung der tatsächlichen Ausbringrate auf dem Untergrund, also der pro Fläche aufgebrachten Düngermenge, beispielsweise über eine Bilderfassung und Auswertung und/oder durch Austreuen des Düngers über sogenannten Auffangmatten, gewonnen werden.

Vorzugsweise wird der Korrekturwert in Form einer Einstellempfehlung an einer Bedienstation, insbesondere als korrigierter Soll-Abwurfwinkel angezeigt und/oder manuell eingegeben. In diesem Fall lässt sich beispielsweise überprüfen, ob der berechnete Wert innerhalb eines für den Düngerauftrag und die vorliegenden Maschinenkonfiguration geeigneten Bereichs liegt. Beispielsweise lässt sich dadurch vermeiden, dass der mittlere Abwurfwinkel kleiner als 15° ist, was erfahrungsgemäß zu einer Störung des Streubilds durch teilweises Streuen des Düngers gegen Maschinenkomponenten bei bestimmten Düngerstreuertypen führen würde. Ebenso lässt sich vermeiden, dass der mittlere Abwurfwinkel größer als 24° wird, was bei bestimmten Typen von Zweischeibenstreuern erfahrungsgemäß zu ausgeprägt trapezförmigen Streubildern und einer instabilen Düngerverteilung führen würde. Der Bediener kann dann mit der Einstellempfehlung gezielt in die Abwurfwinkelregelung eingreifen.

Vorzugsweise wird der Korrekturwert als Relativwert bezogen auf den der Arbeitsbreite zugeordneten Soll-Abwurfwinkel berechnet. Der Korrekturwert kann dann als Berechnungsgröße in Regelungen und an Bedienstationen verwendet werden, die auf einer Eingabe der Wurfweite basieren. Beispielsweise ist es gebräuchlich, bei einem Schleuderstreuer in Abhängigkeit von einer vorgegebenen Arbeitsbreite und einer auszubringenden Düngersorte eine mittels Streutabelle zugeordnete Wurfweite einzustellen. Da der Abwurfwinkel aus der Arbeitsbreite und der Wurfweite berechnet werden kann, ist dann in der Regel keine zusätzliche Eingabe des Abwurfwinkels vorgesehen. Eine Korrektur des Abwurfwinkels als Relativwert kann somit direkt in die Regelung ausgehend von einer vorgegebenen Arbeitsbreite und Wurfweite eingehen.

Entsprechend ist eine Ausführungsform besonders vorteilhaft, bei der der Soll-Abwurfwinkel aus einer der Arbeitsbreite des Düngerauftrags zugeordneten Wurfweite maschinell berechnet wird.

Vorzugsweise wird eine Abwurfwinkelverteilung beim Düngeraustrag, insbesondere mittels Radarstrahlen, maschinell vom Schleuderstreuer aus überwacht und ein dabei ermittelter Ist-Abwurfwinkel an den korrigierten Soll-Abwurfwinkel angepasst. Eine Radarüberwachung der Abwurfwinkelverteilung, also beispielswiese der Düngermengenverteilung entlang eines vorgegebenen Radius um die Streuscheibe herum, ist besonders zuverlässig und gegen Störeinflüsse unempfindlich. Somit lässt sich der Ist-Abwurfwinkel während des Düngeraustrags fortlaufend, also in geeigneten Zeitabständen wiederholt, überwachen und an den auf der Grundlage der Messdaten korrigiertem Soll-Abwurfwinkel angleichen.

Vorzugsweise werden die Messdaten durch stichprobenartiges Auffangen der Düngersorte im Schalenversuch gewonnen. Dies ermöglicht dem Bediener eine Kontrolle der Düngerverteilung bestimmter Düngerchargen mit einem geringen apparativen Aufwand. Es wäre jedoch auch denkbar, Messdaten und/oder Referenzdaten durch andere Verfahren zu gewinnen, beispielsweise durch eine kombinierte Radarüberwachung beziehungsweise Radarmessung der Abwurfwinkelverteilung und der Wurfweiteverteilung. Auch daraus ließen sich mittlere Ist-Abwurfwinkel und/oder mittlere Ist-Wurfweiten berechnen, die sich zur Charakterisierung von Streubildern eignen.

Vorzugsweise wird durch Vergleich der Messdaten mit den Referenzdaten ferner ein Korrekturwert für eine der Arbeitsbreite des Düngeraustrags zugeordnete Drehzahl der Streuscheibe maschinell berechnet. Dadurch werden die Möglichkeiten, tatsächlich vorliegende Streubilder an gewünschte Streubilder einer bestimmten Arbeitsbreite anzupassen, erweitert. Beispielsweise ist im Rahmen der vorliegenden Maschinenkonfiguration ein maximaler Verstellbereich für den Ist-Abwurfwinkel und somit auch für den Soll-Abwurfwinkel, vorgegeben. Sollte eine Korrektur des Streubilds über den vom Soll-Abwurfwinkel abgedeckten Bereich hinaus notwendig werden, so lässt sich dies unter bestimmten Voraussetzungen durch eine zusätzliche Anpassung der Drehzahl der Streuscheiben bewirken. Eine derartige Anpassung wird beispielsweise dem Bediener an einer Bedienstation vorgeschlagen und vom Bediener entweder bestätigt oder editiert.

Die gestellte Aufgabe wird ebenso mit einem Schleuderstreuer für Dünger gemäß Anspruch 10 gelöst. Demnach umfasst dieser wenigstens eine Streuscheibe, vorzugsweise zwei Streuscheiben, und ein Computersystem zum hinsichtlich eines Typs der Streuscheibe, einer vorgegebenen Arbeitsbreite und einer verwendeten Düngersorte spezifischen Vergleich von Messdaten von Ist-Streubildern mit Referenzdaten von Soll-Streubildern. Ferner ist das Computersystem zum Korrigieren eines Soll-Abwurfwinkels der Streuscheibe auf der Grundlage des Vergleichs ausgebildet. Der Soll-Abwurfwinkel ist dann insbesondere ein mittlerer Soll-Abwurfwinkel. Das Computersystem umfasst wenigstens eine Bedienstation in Form eines Bordrechners oder eines mobilen Rechners. Ist-Streubilder werden mit einer separaten stationären oder mitführbaren Messeinrichtung ermittelt. Diese ist vorzugsweise kein fester funktionaler Bestandteil des Schleuderstreuers.

Vorzugsweise ist das Computersystem ferner zum Berechnen eines Korrekturwerts für eine Soll-Drehzahl der Streuscheibe auf der Grundlage des Vergleichs ausgebildet. Dadurch lassen sich die Möglichkeiten zur Anpassung des Ist-Streubilds an ein Soll-Streubild bei unterschiedlichen Düngersorten und Düngerchargen erweitern.

Vorzugsweise umfasst der Schleuderstreuer ferner eine Steuereinheit zum Steuern eines an der Streuscheibe ausgebildeten Einleitsystems für Dünger auf der Grundlage des Soll-Abwurfwinkels und/oder zum Steuern einer Soll-Drehzahl der Streuscheibe. Dadurch lässt sich ein automatischer Regelkreis zum Einstellen des Soll-Abwurfwinkels ausbilden. Somit kann ein mittels Messdaten korrigierter Soll-Abwurfwinkel zum fortlaufenden Angleichen eines gemessenen Ist-Abwurfwinkels eingesetzt werden.

Vorzugsweise umfasst der Schleuderstreuer ferner mehrere benachbart zur Streuscheibe angeordnete Radarsensoren zum Überwachen einer Ist-Abwurfwinkelverteilung beim Düngeraustrag. Die Radarsensoren sind insbesondere zur fortlaufenden Überwachung des Abwurfwinkels ausgebildet, so dass der gemessene Ist-Abwurfwinkel fortlaufend an einen entsprechenden Soll-Abwurfwinkel angeglichen werden kann.

Vorzugsweise umfasst der Schleuderstreuer ferner eine Bedienstation zur Auswahl der Düngersorte und der Arbeitsbreite, zur Eingabe des Soll-Abwurfwinkels und/oder einer Soll-Wurfweite, und zur Eingabe von Messdaten des Ist-Streubilds. Die Anpassung und Regelung des Abwurfwinkels kann somit anhand von gebräuchlicher Anwendungsparameter und Maschinenparameter bedient werden. Insbesondere lässt sich dadurch eine zusätzliche Eingabe von Hilfsparametern der Abwurfwinkelanpassung beziehungsweise der Abwurfwinkelregelung vermeiden.

Vorzugsweise ist der Schleuderstreuer als Zweischeibenstreuer ausgebildet, wobei sich die Einleitsysteme der Streuscheiben auf der Grundlage des Vergleichs steuern lassen. Dies ermöglicht eine flexible Anpassung von Streubildern an die Arbeitsbreite, beispielsweise die Verwendung von Streubildern, die eine gezielte Mischform eines im Wesentlichen dreieckigen Streubilds und eines trapezförmigen Streubilds darstellen. Hierbei lassen sich die Streuscheiben des Zweischeibenstreuers vorzugsweise gemeinsam steuern, wobei eine gezielte Steuerung einzelner Streuscheiben ebenso denkbar ist.

Eine bevorzugte Ausführungsform der Erfindung ist in den Zeichnungen dargestellt. Es zeigen:
- Fig. 1: eine schematische Draufsicht auf einen Schleuderstreuer und ein von diesem erzeugtes Streubild mit dem hierfür charakteristischen Parametern; und
- Fig. 2: ein Ablaufdiagramm zum Anpassen des Soll-Abwurfwinkels.

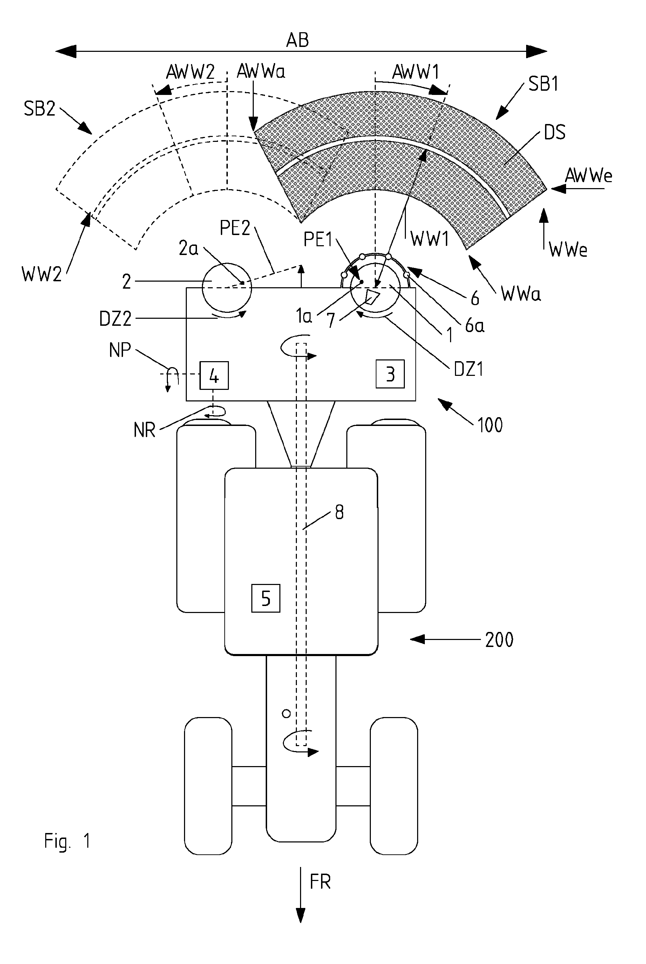

Wie die Fig. 1 erkennen lässt, umfasst der Schleuderstreuer 100 in einer bevorzugten Ausführungsform eine erste Streuscheibe 1 mit einem zugehörigen Einleitsystem 1a für Dünger sowie eine zweite Streuscheibe 2 mit einem zugehörigen Einleitsystem 2a. Die Einleitsysteme 1a, 2a umfassen herkömmliche Dosierungseinrichtungen, wobei wenigstens die Stellungen PE1, PE2 ihrer Aufgabepunkte bezüglich der Streuscheiben 1, 2 maschinell eingestellt werden können. Die Stellungen PE1, PE2 sind beispielsweise als Positionswinkel bezüglich einer beliebigen Hilfslinie in Drehrichtung der jeweiligen Streuscheibe 1, 2 definiert, gegebenenfalls ferner als radialer Abstand von der Drehachse der jeweiligen Streuscheibe 1, 2.

In der Fig. 1 sind die Einleitsysteme 1a, 2a schematisch anhand ihrer Aufgabepunkte für Dünger dargestellt. Aus Gründen der Übersichtlichkeit ist lediglich die Stellung PE2 des zweiten Einleitsystems 2a beispielhaft durch dessen Positionswinkel angedeutet. Für das Einleitsystem 1 a gilt der gleiche Zusammenhang bezogen auf die Drehrichtung der ersten Streuscheibe 1.

Der Schleuderstreuer 100 umfasst ferner eine Steuereinheit 3 zur Steuerung der Streuscheiben 1, 2 und ihrer Einleitsysteme 1a, 2a. Die Steuereinheit 3 ermöglicht wenigstens eine Anpassung der Stellungen PE1, PE2 und insbesondere bei hydraulischem Antrieb der Streuscheiben 1, 2 auch eine Anpassung ihrer Drehzahlen DZ1, DZ2. Bei mechanischem Antrieb der Streuscheiben 1, 2 werden die Drehzahlen DZ1, DZ2 beispielsweise von einem Schlepper 200 aus eingestellt.

Schematisch dargestellt ist ferner eine optionale Neigungsmesseinrichtung 4 zum Messen einer ersten Hangneigung NP in Fahrtrichtung FR und einer zweiten Hangneigung NR orthogonal zur Fahrtrichtung FR.

Ferner ist ein Computersystem umfassend eine Bedienstation 5, beispielsweise in Form eines Bordrechners oder eines mobilen Rechners, im Bereich eines mit dem Schleuderstreuer 100 verbundenen Schleppers 200 dargestellt. Die Bedienstation 5 kann auch am Schleuderstreuer 100 angeordnet sein. Die Bedienstation 5 dient zur Anzeige von Maschinenparametern des Schleuderstreuers 100 und zur Eingabe von wenigstens der auszubringenden Düngersorte DS und einer Arbeitsbreite AB für den Düngeraustrag. Das Computersystem umfasst vorzugsweise auch die Steuereinheit 3.

Im nutzbaren Abwurfwinkelbereich der ersten Streuscheibe 1 ist eine Überwachungseinrichtung 6 zum Messen einer Abwurfwinkelverteilung im Wesentlichen quer zur Fahrtrichtung FR ausgebildet. Die Überwachungseinrichtung 6 umfasst mehrere ringförmig um die Streuscheibe 1 angeordnete Radarsensoren 6a. Diese senden beispielsweise Radarkeulen aus und detektieren die von den Düngerteilchen reflektierten Radarwellen auf bekannte Weise, um daraus einen Istwert des Abwurfwinkels AWW1 zu berechnen. Es wären hierzu prinzipiell auch andere Verfahren denkbar, die die weggeschleuderten Düngerteilchen beispielsweise optisch oder elektromechanisch überwachen.

Zusätzlich ist im Bereich der ersten Streuscheibe 1 eine optionale Überwachungseinrichtung 7 zum Messen einer Wurfweiteverteilung des Düngeraustrags schematisch angedeutet. Auch die Überwachungseinrichtung 7 sendet wenigstens eine Radarkeule aus und detektiert die von den Düngerteilchen reflektierten Radarwellen auf bekannte Weise. Daraus lässt sich beispielsweise ein Istwert der Wurfweite WW1 berechnen. Auch an dieser Stelle wären andere Verfahren denkbar, die die weggeschleuderten Düngerteilchen beispielsweise optisch oder elektromechanisch überwachen.

Die Streuscheiben 1, 2 werden vom Schlepper 200 mittels einer Antriebskopplung 8 gegenläufig mit vorzugsweise identischen Drehzahlen DZ1, DZ2 gedreht. Die Antriebskopplung 8 kann hydraulisch sein oder mechanisch mittels einer angedeuteter Zapfwelle oder dergleichen.

Die Streuscheiben 1, 2 sind bezüglich der Fahrtrichtung FR achsensymmetrisch angeordnet und erzeugen auf einer horizontalen Referenzebene vorzugsweise entsprechend symmetrische Streubilder SB1, SB2. Dies ist in der Fig. 1 lediglich zur Verdeutlichung der charakteristischen Parameter schematisch angedeutet. Jedoch können die Streubilder SB1, SB2 je nach Vorgabe und/oder vorgefundener Topographie auch asymmetrisch ausgebildet sein. Für entsprechende Anpassungen der Istwerte der Abwurfwinkel AWW1, AWW2 an ihre Sollwerte sind die Einleitsysteme 1 a, 2a daher unabhängig voneinander einstellbar.

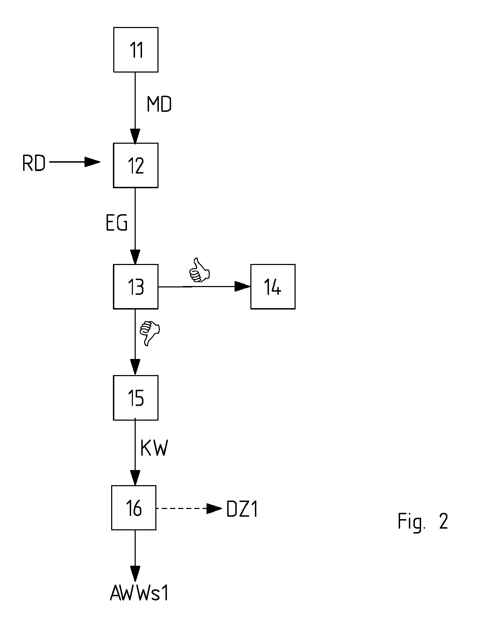

Wie die Fig. 2 hinsichtlich des Verfahrens erkennen lässt, basiert dieses auf Messdaten MD, die beim Vermessen eines Streubilds SB1 in einem Schritt 11 beispielsweise durch einen Schalenversuch ermittelt werden. Zu diesem Zweck werden in bekannter Weise Schalen im Streubereich des Schleuderstreuers 100 aufgestellt und die darin aufgefangenen Mengen des Düngers bestimmt. Dies ist an sich bekannt und daher nicht näher erläutert. Die Messdaten MD könnten auch durch Radarmessung gewonnen werden.

Die Messdaten MD werden in einem Schritt 12 mit Referenzdaten RD eines zugehörigen Soll-Streubilds verglichen. Dies erfolgt vorzugsweise nach Eingabe der Messdaten MD in der Bedienstation 5. Der Schritt 12 könnte prinzipiell jedoch auch in einer externen Messeinrichtung maschinell erfolgen oder manuell mit Hilfe vom Vergleichstabellen oder dergleichen. Die Messdaten MD und Referenzdaten RD können einzelne Messpunkte und entsprechende Referenzpunkte aus dem Schritt 11 sein, daraus jeweils berechnete Verteilungsmuster, charakteristische Werte für Abwurfwinkel und/oder Wurfweiten, oder dergleichen.

Auf der Grundlage eines Ergebnisses EG aus dem Schritt 12 wird in einem Schritt 13 beurteilt, ob das ermittelte Ist-Streubild SB1 hinsichtlich der Abwurfwinkelverteilung, einschließlich des zugehörigen mittleren Ist-Abwurfwinkels AWW1, in ausreichendem Maße mit dem Soll-Streubild, und damit dem zugehörigen Soll-Abwurfwinkel, übereinstimmt.

Wird das Ist-Streubild als ordnungsgemäß beurteilt, können die geltenden Sollwerte für den Abwurfwinkel und/oder die Wurfweite in einem Schritt 14 für den Arbeitsbetrieb bestätigt werden.

Für den Fall, dass das ermittelte Ist-Streubild SB1 nicht ordnungsgemäß ist, berechnet das Computersystem in einem Schritt 15 wenigstens einen Korrekturwert KW, also beispielsweise einen Absolutwert für einen neuen Soll-Abwurfwinkel AWWs1, einen Relativwert zur Korrektur des herrschenden Soll-Abwurfwinkels, gegebenenfalls auch einen weiteren Korrekturwert für die Drehzahl DZ1 der Streuscheibe 1.

Schließlich wird in einem Schritt 16 ein neuer Soll-Abwurfwinkel AWWs1 mit Hilfe des Korrekturwerts KW eingestellt. Gegebenenfalls wird auch die Drehzahl DZ1 neu eingestellt. Beides kann sowohl durch einen Eingabevorschlag an der Bedienstation 5 erfolgen als auch durch automatische Berechnung und Korrektur des Soll-Abwurfwinkels AWWs1 bzw. der Drehzahl DZ1.

Je nach vorliegender Konfiguration des Schleuderstreuers 100 kann es vorkommen, dass bestimmte Düngersorten DS systematisch in ihren Eigenschaften und in den vom Schleuderstreuer 100 letztendlich produzierten Streubildern von Messdaten MD und/oder Referenzdaten RD abweichen. Derartige Abweichungen können als zusätzlicher Korrekturwert im Sinne eines Offsets in die Anpassung des Soll-Abwurfwinkels AWWs1 einfließen. Beispielsweise könnten solche zusätzlichen Korrekturwerte in Streutabellen vorgehalten werden. Ebenso ist es denkbar, festgestellte systematische Abweichungen im Sinne eines Offsets als Bestandteil der Messdaten MD abzuspeichern, beispielsweise um diese für spätere Anpassungen des Abwurfwinkels statistisch auszuwerten oder in anderer Form in aktuelle Messdaten MD einfließen zu lassen. Ebenso könnten zuvor festgestellte systematische Abweichungen im Sinne reproduzierbarer Abweichungen bei späteren Anpassungen des Soll-Abwurfwinkels aus einem Datenspeicher abgerufen und erneut verwendet werden.

Oben wurde stellvertretend nur die Anpassung des Soll-Abwurfwinkels AWWs1 für die erste Streuscheibe 1 beschrieben. Die Abwurfwinkelregelung der zweiten Streuscheibe 2 kann auf gleiche Weise auf der Grundlage der an der ersten Streuscheibe 1 gewonnen Messdaten MD und Berechnungsergebnisse EG geregelt werden, oder auf entsprechende Weise mittels zusätzlicher Messdaten für die zweite Streuscheibe 2.

In jedem Fall ermöglicht das Verfahren, den Ist-Abwurfwinkel AWW1 beim Düngeraustrag, beispielsweise auf der Grundlage einer Radarüberwachung der Abwurfwinkelverteilung, fortlaufend an einen Soll-Abwurfwinkel AWWs1 anzugleichen, der hinsichtlich der auszubringenden Düngersorte und ihres Streubilds korrigiert ist.

## Patentansprüche

1. Verfahren zur Abwurfwinkelanpassung eines Schleuderstreuers (100), wobei Messdaten (MD), die ein von einer oder mehreren Streuscheiben (1) erzeugtes Ist-Streubild (SB1) einer Düngersorte (DS) charakterisieren, welche durch eine separate stationäre oder mitführbare Messeinrichtung ermittelt werden, die vorzugsweise kein fester funktionaler Bestandteil des Schleuderstreuers ist, mit Referenzdaten (RD), die ein der Streuscheibe (1) und der Düngersorte (DS) zugeordnetes Soll-Streubild charakterisieren, verglichen werden und daraus ein Korrekturwert (KW) für einen einer vorgegebenen Arbeitsbreite (AB) des Düngeraustrags zugeordneten Soll-Abwurfwinkel (AWWs1), insbesondere für einen mittleren Soll-Abwurfwinkel, maschinell berechnet wird.

2. Verfahren nach Anspruch 1, wobei die Stellung (PE1) eines Einleitsystems (1a) für Dünger bezüglich der Streuscheibe (1) automatisch auf der Grundlage des Korrekturwerts (KW) verändert wird.

3. Verfahren nach Anspruch 1 oder 2, wobei der Korrekturwert (KW) in Form einer Einstellempfehlung an einer Bedienstation (5), insbesondere als korrigierter Soll-Abwurfwinkel (AWWs1), angezeigt wird und/oder manuell eingegeben wird.

4. Verfahren nach einem der vorigen Ansprüche, wobei der Korrekturwert (KW) als Relativwert bezogen auf den der Arbeitsbreite (AB) zugeordneten Soll-Abwurfwinkel (AWWs1) berechnet wird.

5. Verfahren nach Anspruch 4, wobei der Soll-Abwurfwinkel (AWWs1) aus einer der Arbeitsbreite (AB) für den Düngeraustrag zugeordneten Wurfweite (WW1) maschinell berechnet wird.

6. Verfahren nach wenigstens einem der vorigen Ansprüche, wobei eine Abwurfwinkelverteilung beim Düngeraustrag, insbesondere mittels Radarstrahlen, maschinell vom Schleuderstreuer (100) aus überwacht und ein dabei ermittelter Ist-Abwurfwinkel (AWW1) an den korrigierten Soll-Abwurfwinkel (AWWs1) angepasst wird.

7. Verfahren nach wenigstens einem der vorigen Ansprüche, wobei die Messdaten (MD) durch stichprobenartige Erfassung der tatsächlich auf dem Untergrund ausgebrachten Düngerrate gewonnen werden.

8. Verfahren nach Anspruch 7, wobei die Messdaten (MD) durch stichprobenartiges Auffangen der Düngersorte (DS) in einem Schalenversuch gewonnen werden.

9. Verfahren nach wenigstens einem der vorigen Ansprüche, wobei durch Vergleich der Messdaten (MD) mit den Referenzdaten (RD) ferner ein Korrekturwert für eine der Arbeitsbreite (AB) für den Düngeraustrag zugeordnete Drehzahl (DZ1) der Streuscheibe (1) maschinell berechnet wird.

10. Schleuderstreuer (100) für Dünger, mit wenigstens einer Streuscheibe (1) und einem Computersystem zum hinsichtlich eines Typs der Streuscheibe (1), einer vorgegebenen Arbeitsbreite (AB) und einer verwendeten Düngersorte (DS) spezifischen Vergleich von Messdaten (MD) von Ist-Streubildern (SB1) mit Referenzdaten (RD) von Soll-Streubildern und zum Korrigieren eines Soll-Abwurfwinkels (AWWs1) der Streuscheibe (1), insbesondere eines mittleren Soll-Abwurfwinkels, auf der Grundlage des Vergleichs.

11. Schleuderstreuer nach Anspruch 10, wobei das Computersystem ferner zum Berechnen eines Korrekturwerts für eine Drehzahl (DZ1) der Streuscheibe (1) auf der Grundlage des Vergleichs ausgebildet ist.

12. Schleuderstreuer nach Anspruch 10 oder 11, ferner mit einer Steuereinheit (3) zum Steuern eines an der Streuscheibe (1) ausgebildeten Einleitsystems (1a) für Dünger auf der Grundlage des Soll-Abwurfwinkels (AWWs1) und/oder zum Steuern einer Drehzahl (DZ1) der Streuscheibe (1).

13. Schleuderstreuer nach einem der Ansprüche 10 bis 12, ferner mit mehreren benachbart zur Streuscheibe (1) angeordneten Radarsensoren (6a) zum Überwachen einer Ist-Abwurfwinkelverteilung beim Düngeraustrag.

14. Schleuderstreuer nach wenigstens einem der Ansprüche 10 bis 13, ferner mit einer Bedienstation (5) zur Auswahl der Düngersorte (DS) und der Arbeitsbreite (AB), zur Eingabe des Soll-Abwurfwinkels (AWWs1) und/oder einer Soll-Wurfweite, und zur Eingabe von Messdaten (MD) des Ist-Streubilds (SB1).

15. Schleuderstreuer nach wenigstens einem der Ansprüche 10 bis 14, der als Zweischeibenstreuer ausgebildet ist, wobei sich die Einleitsysteme (1a, 2a) der Streuscheiben (1, 2) auf der Grundlage des Vergleichs steuern lassen.
